# FASCICULE DE BREVET EUROPEEN

(11) **EP 1 544 532 B1**
(45) Date de publication et mention de la délivrance du brevet: **03.07.2013**
(21) Numéro de dépôt: 04029971.1
(22) Date de dépôt: 20.12.2004
(51) Int. Cl.: F28F 9/02, F16L 39/00

(54) **Dispositif de raccordement entre un échangeur de chaleur et ses conduits d'admission et de sortie de liquide et son procédé de montage correspondant**
Kupplungsvorrichtung zwischen einem Wärmetauscher und seinen Zu- und Auslassflüssigkeitsleitungen und entsprechendes Montageverfahren
Coupling device between an heat exchanger and its in- and outlet liquid conduits and corresponding mounting method

(30) Priorité: 19.12.2003 ES 200303066
(43) Date de publication de la demande: 22.06.2005
(73) Titulaire: VALEO CLIMATIZACION S.A., 08100 Martorellas, Barcelona (ES)
(72) Inventeur: Casabella, Manel, 08310 Argentona (ES)
(74) Mandataire: Vieillevigne, Sébastien Nicolas Bernard

(56) Documents cités:
- DE-A1- 3 047 867
- DE-A1- 10 029 366
- US-A- 5 556 138
- US-A1- 2003 193 188
- PATENT ABSTRACTS OF JAPAN vol. 2000, no. 21, 3 août 2001 (2001-08-03) & JP 2001 116270 A (FUJII GOKIN SEISAKUSHO CO LTD), 27 avril 2001 (2001-04-27)

## Description

La présente invention concerne un dispositif de raccordement entre un échangeur de chaleur et ses conduits d'admission et de sortie de liquide, en particulier pour des appareils de chauffage/ventilation et/ou de climatisation de véhicules automobiles.

Il faut souligner que l'échangeur de chaleur peut être par exemple un radiateur, un évaporateur, un condenseur ou un corps de chauffe, entre autres.

L'invention concerne également son procédé de montage correspondant.

On connaît des dispositifs de raccordement entre un échangeur de chaleur et ses conduits d'admission et de sortie de liquide, en particulier pour des appareils de chauffage/ventilation et/ou de climatisation de véhicules automobiles, du type pour lequel l'échangeur de chaleur comprend deux embouts disposés de façon adjacente pour l'insertion à l'intérieur de ceux-ci des extrémités des deux conduits, de sorte que l'extrémité de chaque embout soit en contact avec un rebord limiteur du conduit correspondant.

Lesdits dispositifs de raccordement comprennent deux brides métalliques indépendantes, une pour chaque conduit, chaque bride unissant la collerette d'un conduit avec l'extrémité de l'embout correspondant. De même, lesdits dispositifs comprennent deux joints d'étanchéité en caoutchouc qui présentent une configuration particulière (non standard), chaque joint étant disposé entre l'extrémité d'un conduit et l'embout correspondant. D'autre part, chaque bride métallique est munie d'une vis de réglage pour obtenir une immobilisation adéquate.

Toutefois, lesdits dispositifs de raccordement présentent une série d'inconvénients que l'on décrit ci-après.
- Le fait de comprendre des brides indépendantes pour chaque conduit implique d'avoir un grand nombre de composants à monter.
- On utilise des joints d'étanchéité avec une forme particulière, non standard, ce qui augmente les coûts de fabrication.
- Les brides métalliques, en étant serrées, ne permettent pas d'avoir du jeu du fait qu'elles fixent les conduits respectifs à l'échangeur de chaleur dans les sens axial et radial. En prenant en compte le fait que les conduits s'appuient et s'emboîtent sur toute leur longueur en divers points de la coque en plastique de l'appareil de chauffage, ils ne peuvent pas absorber les écarts possibles en raison de la tolérance de fabrication des conduits et coques sur lesquels ils s'appuient, lesdites brides restant en position forcée étant donné qu'elles ne peuvent s'emboîter parfaitement.
- Le procédé de montage des brides métalliques se révèle très compliqué pour les opérateurs, du fait que pour chaque conduit ils doivent réaliser les étapes suivantes : tout d'abord, on doit accoupler l'un des conduits à un embout en plaçant un joint d'étanchéité entre eux ; ensuite, on doit placer une bride métallique sur la collerette du conduit et l'extrémité de l'embout, en veillant bien à ne pas déséquilibrer l'ensemble jusqu'à ce qu'il soit monté, et serrer immédiatement la bride avec sa vis de réglage. Ce même procédé doit être réalisé pour le second conduit.

Il s'agit donc d'un procédé de montage très compliqué pour les opérateurs, de nombreux cas de lésions musculaires et de tendinite aux mains se produisant. En conséquence, on a besoin d'un important temps de montage de la part de l'opérateur, en plus du fait que l'on a besoin de beaucoup d'attention. D'autre part, le coût des pièces est élevé, étant donné qu'il s'agit de concepts non standardisés.

Le brevet n° DE 10029366 concerne un dispositif de raccordement, en particulier pour le raccordement d'un conduit à un échangeur de chaleur d'un système de chauffage ou d'air conditionné d'un véhicule, qui comprend une seule bride qui entoure les extrémités de réunion de deux conduits disposés l'un à la suite de l'autre. Ladite bride est faite en plastique et est formée de deux corps susceptibles d'être accouplés entre eux, lesquels comprennent quelques moyens de fermeture constitués d'une bande souple munie de protubérances susceptibles de s'accoupler dans un logement complémentaire disposé dans le corps opposé.

Le brevet n° DE 3047867 concerne un dispositif de raccordement, pour la réunion de deux conduits disposés l'un à la suite de l'autre, le premier conduit comportant une aile périphérique de diamètre supérieur qui entoure l'extrémité du second conduit, tandis que le second conduit comprend sur sa superficie extérieure une zone cannelée, on prévoit également un joint d'étanchéité disposé entre les superficies de réunion des deux conduits. Le dispositif de raccordement est composé d'une seule bride qui entoure l'aile périphérique et s'appuie sur la zone cannelée, réunissant ainsi les deux conduits. Ladite bride est formée de deux parties en forme de C réunies par une extrémité, comprenant en outre des moyens d'ouverture et de fermeture.

Comme on l'a décrit, les deux brevets cités concernent des dispositifs de raccordement pour réunir deux conduits disposés l'un à la suite de l'autre. Toutefois, aucun desdits brevets ne prévoit le cas pour lequel on a besoin de raccorder deux conduits parallèles entre eux aux deux embouts d'un échangeur de chaleur, ce qui est l'objet de l'invention, nécessitant donc une bride indépendante pour chaque conduit avec les mêmes inconvénients cités précédemment.

L'objet du dispositif de raccordement entre un échangeur de chaleur et ses conduits d'admission et de sortie de liquide, en particulier pour des appareils de chauffage/ventilation et/ou de climatisation de véhicules automobiles, de la présente invention consiste à résoudre les inconvénients que présentent les dispositifs connus dans l'art, en fournissant une série d'avantages que l'on va décrire par la suite.

Le dispositif de raccordement entre un échangeur de chaleur et ses conduits d'admission et de sortie de liquide, en particulier pour des appareils de chauffage/ventilation et/ou de climatisation de véhicules automobiles, est du type pour lequel l'échangeur de chaleur comprend deux embouts disposés de façon adjacente pour l'insertion dans leur intérieur des extrémités des deux conduits, de sorte que l'extrémité de chaque embout soit en contact avec une collerette limitative du conduit correspondant, ledit dispositif de raccordement comprenant des moyens d'étanchéité disposés entre l'extrémité de chaque conduit et l'embout.

Le dispositif de raccordement entre un échangeur de chaleur et ses conduits d'admission et de sortie de liquide, objet de la présente invention selon la revendication 1, est caractérisé par le fait qu'il comprend une seule bride pour la fixation simultanée des deux conduits, ladite bride étant divisée en deux corps, supérieur et inférieur, susceptibles d'être accouplés entre eux par l'intermédiaire de moyens de fixation.

De préférence, la bride est faite en matière plastique.

De façon avantageuse, les moyens de fixation des deux corps sont composés d'une vis de réglage.

De cette façon, on obtient une réduction du nombre de composants pour le dispositif de raccordement, en utilisant une seule bride pour la fixation des deux conduits à l'échangeur de chaleur avec une seule vis de réglage, réduisant ainsi par ailleurs les coûts de fabrication.

De façon avantageuse, les moyens d'étanchéité sont composés de deux joints toriques, chacun étant disposé à l'extrémité d'un conduit. Lesdits joints toriques sont des pièces standard, réduisant ainsi sensiblement les coûts de fabrication.

Selon l'invention, les joints toriques sont en caoutchouc EPDM.

De même, l'utilisation des joints toriques permet que la bride ait une certaine tolérance en ce qu'elle peut absorber les possibles écarts en raison de la tolérance de fabrication des conduits et des coques de l'appareil de chauffage sur lesquels ils s'appuient.

Selon l'invention, le dispositif comprend deux anneaux de guidage, chacun étant disposé en contact avec la collerette du conduit et en position adjacente au joint torique.

Chaque anneau de guidage a pour fonction de pousser le joint torique jusqu'à son emplacement adéquat, ainsi que de le protéger de déformations excessives.

De façon préférée, les anneaux de guidage sont en matière plastique.

En outre, la bride comprend, sur un de ses deux corps, un clip de sécurité pour l'accouplement avec un emboîtement complémentaire réalisé sur l'autre corps.

De façon avantageuse, les deux corps de la bride comprennent quelques emboîtements intérieurs pour l'accouplement avec les embouts de l'échangeur de chaleur et une partie des conduits.

Selon un mode de réalisation de l'invention, les deux corps de la bride sont réunis par une pellicule mince sous forme de charnière susceptible de se rompre pour séparer lesdits corps lorsque la bride doit être montée.

Selon un autre mode de réalisation de l'invention, les deux corps de la bride sont réunis par une pellicule mince sous forme de charnière destinée à créer une union entre les deux corps de la bride.

Selon un autre aspect de l'invention, le procédé de montage appliqué au dispositif de l'invention est caractérisé par le fait qu'il consiste à réaliser les étapes suivantes :
a) monter le corps inférieur de la bride sur un support de l'appareil de chauffage/ventilation et/ou de climatisation,
b) monter l'échangeur de chaleur sur un logement de l'appareil de chauffage/ventilation et/ou de climatisation, de sorte que les embouts de l'échangeur de chaleur soient disposés sur les emboîtements intérieurs dudit corps inférieur de la bride,
c) obtenir deux conduits munis de leur anneau de guidage correspondant,
d) placer le joint torique d'étanchéité sur les deux conduits,
e) réaliser l'accouplement des extrémités des conduits à l'intérieur des embouts correspondants de l'échangeur de chaleur, jusqu'à ce que l'extrémité desdits embouts entre en contact avec la collerette des conduits,
f) monter le corps supérieur de la bride,
g) placer une vis de réglage et visser les deux corps de la bride, de sorte que lors du vissage, le corps inférieur monte jusqu'à s'emboîter dans le corps supérieur, s'accouplant à son tour avec un clip de sécurité.

En conséquence, on parvient à un procédé de montage plus simple, et à un temps d'assemblage réduit, avec la réduction des coûts qui en résulte.

Dans le but de faciliter la description qui a été exposée précédemment, on joint quelques dessins dans lesquels, schématiquement et seulement à titre d'exemple non limitatif, on représente un cas pratique d'un mode de réalisation du dispositif de raccordement entre un échangeur de chaleur et ses conduits d'admission et de sortie de liquide, en particulier pour des appareils de chauffage/ventilation et/ou de climatisation de véhicules automobiles de l'invention, dans lesquels :
la figure 1 représente une vue en perspective et en éclaté du dispositif de raccordement de l'invention, montrant les deux conduits ;
la figure 2 représente une vue en coupe longitudinale de la zone d'accouplement entre l'extrémité d'un conduit avec son embout correspondant de l'échangeur de chaleur ;
la figure 3 représente une vue en perspective de la bride avec ses deux corps avant qu'ils soient accouplés entre eux ; et
la figure 4 représente une vue en perspective du corps inférieur de la bride.

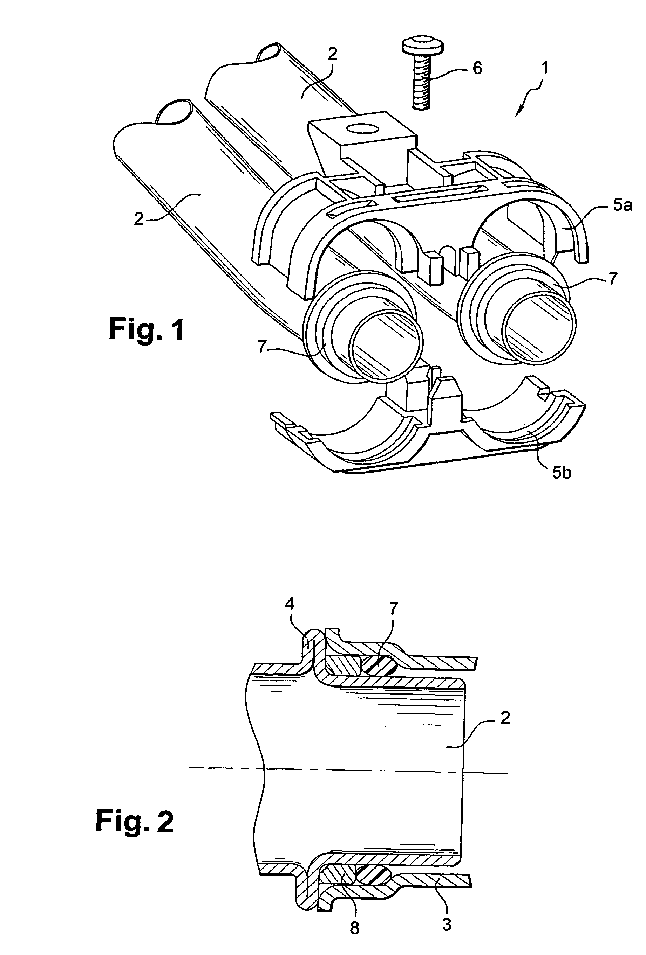

Comme on peut s'en rendre compte sur les figures, le dispositif de raccordement 1 entre un échangeur de chaleur (non représenté) et ses deux conduits 2 d'admission et de sortie de liquide, pour un appareil de chauffage/ventilation et/ou de climatisation de véhicules automobiles, est du type pour lequel l'échangeur de chaleur comprend deux embouts 3 disposés de façon adjacente pour l'insertion dans leur intérieur des extrémités des deux conduits 2, de sorte que l'extrémité de chaque embout 3 soit en contact avec une collerette limitative 4 du conduit 2 correspondant (voir la figure 2).

Ledit dispositif de raccordement 1 comprend une seule bride 5 en matière plastique pour la fixation simultanée des deux conduits 2, ladite bride 5 étant divisée en deux corps, un supérieur 5a et un inférieur 5b, susceptibles d'être accouplés entre eux au moyen d'une vis de réglage 6.

De cette façon, on obtient une réduction du nombre de composants pour le dispositif de raccordement 1, en n'utilisant qu'une seule bride 5 pour la fixation des deux conduits 2 à l'échangeur de chaleur avec une seule vis de réglage 6, réduisant donc les coûts de fabrication.

Comme on peut s'en rendre compte sur la figure 2, le dispositif de raccordement 1 comprend également deux joints toriques 7 d'étanchéité, chacun étant disposé à l'extrémité d'un conduit 2. Lesdits joints toriques 7 sont des pièces standard, réduisant ainsi remarquablement les coûts de fabrication. De façon préférée, les joints toriques 7 sont en caoutchouc EPDM.

De même, l'utilisation des joints toriques 7 permet que la bride ait une certaine tolérance en ce qu'elle peut absorber les possibles écarts en raison de la tolérance de fabrication des conduits 2 et des coques de l'appareil de chauffage sur lesquels ils s'appuient.

Le dispositif comprend également deux anneaux de guidage 8 en matière plastique, chacun étant disposé en contact avec la collerette 4 du conduit 2 et en position adjacente au joint torique 7. Chaque anneau de guidage 8 a pour fonction de pousser le joint torique 7 jusqu'à son emplacement adéquat, ainsi que de le protéger des déformations excessives.

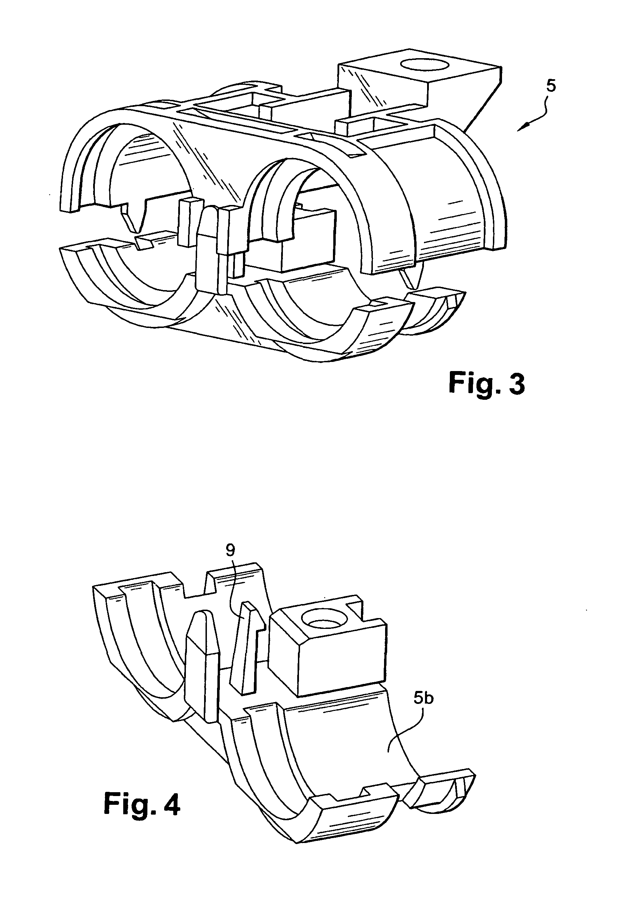

Sur la figure 4, on peut se rendre compte que la bride 5 comprend dans son corps inférieur 5b un clip de sécurité 9 pour l'accouplement avec un emboîtement complémentaire réalisé sur le corps supérieur 5a.

D'autre part, les deux corps de la bride 5 comprennent quelques emboîtements intérieurs pour l'accouplement avec les embouts 3 de l'échangeur de chaleur et une partie des conduits 2.

Le procédé de montage appliqué au dispositif 1 de l'invention est caractérisé par le fait qu'il comprend la réalisation des étapes suivantes :
a) monter le corps inférieur 5b de la bride 5 sur un support de l'appareil de chauffage/ventilation et/ou de climatisation,
b) monter l'échangeur de chaleur sur un logement de l'appareil de chauffage/ventilation et/ou de climatisation, de sorte que les embouts 3 de l'échangeur de chaleur soient disposés sur les emboîtements intérieurs dudit corps inférieur 5b de la bride 5,
c) obtenir deux conduits 2 munis de leur anneau de guidage 8 correspondant,
d) placer le joint torique d'étanchéité 7 sur les deux conduits 2,
e) réaliser l'accouplement des extrémités des conduits 2 à l'intérieur des embouts 3 correspondants de l'échangeur de chaleur, jusqu'à ce que l'extrémité desdits embouts 3 entre en contact avec la collerette 4 des conduits 2,
f) monter le corps supérieur 5a de la bride 5,
g) placer la vis de réglage 6 et visser les deux corps de la bride 5, de sorte que lors du vissage, le corps inférieur 5b monte jusqu'à s'emboîter dans le corps supérieur 5a, s'accouplant à son tour avec le clip de sécurité 9.

En conséquence, on parvient à un procédé de montage plus simple, et à un temps d'assemblage réduit, avec la réduction des coûts qui en résulte.

Il faut souligner que l'on a décrit un mode de réalisation préféré dans lequel les extrémités des conduits présentent une configuration adéquate pour leur accouplement aux embouts des échangeurs de chaleur. Lesdits embouts ont une forme standard, ce qui évite de réaliser des modifications compliquées dans la chaîne de fabrication.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention telle que définie par les revendications.

## Revendications

1. Dispositif de raccordement (1) entre un échangeur de chaleur comprenant deux embouts (3) disposés de façon adjacente et des conduits (2) d'admission et de sortie de fluide, en particulier pour des appareils de chauffage/ventilation et/ou de climatisation de véhicules automobiles, le dispositif de raccordement (1) comprenant les embouts (3) de l'échangeur de chaleur et les conduits (2) d'admission et de sortie de fluide, les conduits (2) d'admission et de sortie de fluide étant respectivement insérés dans les embouts (3) de l'échangeur de chaleur de sorte que l'extrémité de chaque embout (3) soit en contact avec une collerette limitative (4) du conduit correspondant (2), ledit dispositif de raccordement (1) comprenant deux joints toriques (7), disposés respectivement entre l'extrémité de chaque conduit (2) et chaque embout (3),
**caractérisé en ce qu'**il comprend
- une seule bride (5) unissant les collerettes limitatives (4) des conduits (2) avec l'extrémité de l'embout (3) correspondant pour la fixation simultanée des deux conduits (2) aux deux embouts (3), ladite seule bride (5) étant divisée en deux corps, un supérieur (5a) et un inférieur (5b), susceptibles d'être accouplés entre eux par l'intermédiaire de quelques moyens de fixation (6), et
- deux anneaux de guidage (8), disposés respectivement en contact avec la collerette (4) du conduit (2) et en position adjacente au joint torique (7).

2. Dispositif (1) selon la revendication 1, **caractérisé en ce que** la bride (5) est en matière plastique.

3. Dispositif (1) selon la revendication 1, **caractérisé en ce que** les moyens de fixation des deux corps (5a, 5b) sont composés d'une vis de réglage (6).

4. Dispositif (1) selon la revendication 1, **caractérisé en ce que** les joints toriques (7) sont en caoutchouc EPDM.

5. Dispositif (1) selon la revendication 1, **caractérisé en ce que** les anneaux de guidage (8) sont en matière plastique.

6. Dispositif (1) selon la revendication 1, **caractérisé en ce que** la bride (5) comprend, dans un de ses corps (5b), un clip de sécurité (9) pour l'accouplement avec un emboîtement complémentaire réalisé sur l'autre corps (5a).

7. Dispositif (1) selon la revendication 1, **caractérisé en ce que** les deux corps de la bride (5) comprennent quelques emboîtements intérieurs pour l'accouplement avec les embouts (3) de l'échangeur de chaleur et une partie des conduits (2).

8. Dispositif (1) selon la revendication 1, **caractérisé en ce que** les deux corps de la bride (5) sont réunis par une pellicule mince sous forme de charnière susceptible de se rompre pour séparer lesdits corps lorsque la bride (5) doit être montée.

9. Dispositif (1) selon la revendication 1, **caractérisé en ce que** les deux corps de la bride (5) sont réunis par une pellicule mince sous forme de charnière prévue pour créer une réunion entre les deux corps de la bride (5).

10. Procédé de montage d'un dispositif de raccordement (1) entre un échangeur de chaleur comprenant deux embouts (3) disposés de façon adjacente et des conduits (2) d'admission et de sortie de fluide, en particulier pour des appareils de chauffage/ventilation et/ou de climatisation de véhicules automobiles, le dispositif de raccordement (1) comprenant :
- les embouts (3) de l'échangeur de chaleur et les conduits (2) d'admission et de sortie de fluide,
- des moyens d'étanchéité (7) disposés entre l'extrémité de chaque conduit (2) et chaque embout (3), et
- une seule bride (5) pour la fixation simultanée des deux conduits (2) aux deux embouts (3), ladite seule bride (5) étant divisée en deux corps, un supérieur (5a) et un inférieur (5b),
- deux anneaux de guidage (8), disposés respectivement en contact avec la collerette (4) du conduit (2) et en position adjacente au joint torique (7), le procédé consistant à réaliser les étapes suivantes :
a) monter le corps inférieur (5b) de la bride (5) sur un support de l'appareil de chauffage/ventilation et/ou de climatisation,
b) monter l'échangeur de chaleur sur un logement de l'appareil de chauffage/ventilation et/ou de climatisation, de sorte que les embouts (3) de l'échangeur de chaleur soient disposés sur les emboîtements intérieurs dudit corps inférieur (5b) de la bride (5),
c) obtenir deux conduits (2) munis de leur anneau de guidage (8) correspondant,
d) placer le joint torique d'étanchéité (7) sur les deux conduits (2),
e) réaliser l'accouplement des extrémités des conduits (2) à l'intérieur des embouts (3) correspondants de l'échangeur de chaleur, jusqu'à ce que l'extrémité desdits embouts (3) entre en contact avec la collerette (4) des conduits (2),
f) monter le corps supérieur (5a) de la bride (5),
g) placer une vis de réglage (6) et visser les deux corps de la bride (5), de sorte que lors du vissage, le corps inférieur (5b) monte jusqu'à s'emboîter dans le corps supérieur (5a), s'accouplant à son tour avec un clip de sécurité (9).

## Patentansprüche

1. Verbindungsvorrichtung (1) zwischen einem Wärmetauscher, der zwei Ansatzstücke (3), die angrenzend angeordnet sind, und Fluideinlass- und
- auslassrohre (2) umfasst, insbesondere für Heiz-/Kühl- und/oder Klimageräte von Kraftfahrzeugen, wobei die Verbindungsvorrichtung (1) die Ansatzstücke (3) des Wärmetauschers und die Fluideinlass- und -auslassrohre (2) umfasst, wobei die Fluideinlass- und -auslassrohre (2) jeweils derart in die Ansatzstücke (3) des Wärmetauschers eingeführt sind, dass das Ende jedes Ansatzstücks (3) mit einem einschränkenden Flansch (4) des entsprechenden Rohrs (2) in Kontakt steht, wobei die Verbindungsvorrichtung (1) zwei O-Ringe (7) umfasst, die jeweils zwischen dem Ende jedes Rohrs (2) und jedem Ansatzstück (3) angeordnet sind,
**dadurch gekennzeichnet, dass** die Vorrichtung Folgendes umfasst:
- eine einzelne Schelle (5), die die einschränkenden Flansche (4) der Rohre (2) mit dem Ende des entsprechenden Ansatzstücks (3) zur gleichzeitigen Befestigung der zwei Rohre (2) mit den zwei Ansatzstücken (3) zusammenfügt, wobei die einzelne Schelle (5) in zwei Körper, einen oberen (5a) und einen unteren (5b), aufgeteilt ist, die dazu geeignet sind, mittels einiger Befestigungsmittel (6) miteinander gekoppelt zu werden,
- zwei Führungsringe (8), die jeweils in Kontakt mit dem Flansch (4) des Rohrs (2) und in angrenzender Position zu dem O-Ring (7) angeordnet sind.

2. Vorrichtung (1) nach Anspruch 1, **dadurch gekennzeichnet, dass** die Schelle (5) aus Kunststoff ist.

3. Vorrichtung (1) nach Anspruch 1, **dadurch gekennzeichnet, dass** die Befestigungsmittel der zwei Körper (5a, 5b) aus einer Verstellschraube (6) bestehen.

4. Vorrichtung (1) nach Anspruch 1, **dadurch gekennzeichnet, dass** die O-Ringe (7) aus EPDM-Kautschuk sind.

5. Vorrichtung (1) nach Anspruch 1, **dadurch gekennzeichnet, dass** die Führungsringe (8) aus Kunststoff sind.

6. Vorrichtung (1) nach Anspruch 1, **dadurch gekennzeichnet, dass** die Schelle (5) in einem ihrer Körper (5b) einen Sicherheitsclip (9) zur Kopplung mit einer komplementären Aufnahme, die in dem anderen Körper (5a) hergestellt ist, umfasst.

7. Vorrichtung (1) nach Anspruch 1, **dadurch gekennzeichnet, dass** die zwei Körper der Schelle (5) einige innere Aufnahmen zur Kopplung mit den Ansatzstücken (3) des Wärmetauschers und einem Teil der Rohre (2) umfassen.

8. Vorrichtung (1) nach Anspruch 1, **dadurch gekennzeichnet, dass** die zwei Körper der Schelle (5) durch eine dünne Folie in der Form eines Gelenkbands zusammengeführt werden, das dazu geeignet ist zu brechen, um die Körper zu trennen, wenn die Schelle (5) montiert werden muss.

9. Vorrichtung (1) nach Anspruch 1, **dadurch gekennzeichnet, dass** die zwei Körper der Schelle (5) durch eine dünne Folie in der Form eines Gelenkbands zusammengeführt werden, das dazu vorgesehen ist, für eine Zusammenführung zwischen den zwei Körpern der Schelle (5) zu sorgen.

10. Verfahren zur Montage einer Verbindungsvorrichtung (1) zwischen einem Wärmetauscher, der zwei Ansatzstücke (3), die angrenzend angeordnet sind, und Fluideinlass- und -auslassrohre (2) umfasst, insbesondere für Heiz-/Kühl- und/oder Klimageräte von Kraftfahrzeugen, wobei die Verbindungsvorrichtung (1) Folgendes umfasst:
- die Ansatzstücke (3) des Wärmetauschers und die Fluideinlass- und -auslassrohre (2),
- Abdichtungsmittel (7), die zwischen dem Ende jedes Rohrs (2) und jedem Ansatzstück (3) angeordnet sind, und
- eine einzelne Schelle (5) zur gleichzeitigen Befestigung der zwei Rohre (2) mit den zwei Ansatzstücken (3), wobei die einzelne Schelle (5) in zwei Körper, einen oberen (5a) und einen unteren (5b), aufgeteilt ist,
- zwei Führungsringe (8), die jeweils in Kontakt mit dem Flansch (4) des Rohrs (2) und in angrenzender Position zu dem O-Ring (7) angeordnet sind,
wobei das Verfahren in dem Durchführen der folgenden Schritte besteht:
a) Montieren des unteren Körpers (5b) der Schelle (5) auf einer Halterung des Heiz-/Kühl- und/oder Klimageräts,
b) Montieren des Wärmetauschers auf einem Sitz des Heiz-/Kühl- und/oder Klimageräts derart, dass die Ansatzstücke (3) des Wärmetauschers auf den inneren Aufnahmen des unteren Körpers (5b) der Schelle (5) angeordnet werden,
c) Beschaffen von zwei Rohren (2), die mit ihrem entsprechenden Führungsring (8) ausgestattet sind,
d) Platzieren des 0-Dichtrings (7) auf den zwei Rohren (2),
e) Herstellen der Kopplung von Enden der Leitungen (2) mit dem Inneren der entsprechenden Ansatzstücke (3) des Wärmetauschers, bis das Ende der Ansatzstücke (3) mit dem Flansch (4) der Rohre (2) in Kontakt tritt,
f) Montieren des oberen Körpers (5a) der Schelle (5),
g) Platzieren einer Verstellschraube (6) und Verschrauben der zwei Körper der Schelle (5) derart, dass während des Verschraubens der untere Körper (5b) so montiert wird, bis er sich in den oberen Körper (5a) einpasst, wobei er sich bei seiner Drehung mit einem Sicherheitsclip (9) koppelt.

## Claims

1. Coupling device (1) for coupling between a heat exchanger comprising two end-pieces (3) arranged adjacently and fluid inlet and outlet ducts (2), in particular for motor vehicle heating/ventilation and/or air conditioning appliances, the coupling device (1) comprising the end-pieces (3) of the heat exchanger and the fluid inlet and outlet ducts (2), the fluid inlet and outlet ducts (2) being respectively inserted into the end-pieces (3) of the heat exchanger in such a way that the end of each end-piece (3) is in contact with a limiting collar (4) of the corresponding duct (2), said coupling device (1) comprising two 0-ring seals (7), arranged respectively between the end of each duct (2) and each end-piece (3),
**characterized in that** it comprises
- a single flange (5) joining the limiting collars (4) of the ducts (2) with the end of the corresponding end-piece (3) for simultaneously fastening the two ducts (2) to the two end-pieces (3), said single flange (5) being divided into two bodies, a top body (5a) and a bottom body (5b), which can be coupled together via a few fastening means (6), and
- two guiding rings (8), arranged respectively in contact with the collar (4) of the duct (2) and in a position adjacent to the 0-ring seal (7).

2. Device (1) according to Claim 1, **characterized in that** the flange (5) is made of plastic material.

3. Device (1) according to Claim 1, **characterized in that** the fastening means of the two bodies (5a, 5b) consist of an adjusting screw (6).

4. Device (1) according to Claim 1, **characterized in that** the 0-ring seals (7) are made of EPDM rubber.

5. Device (1) according to Claim 1, **characterized in that** the guiding rings (8) are made of plastic material.

6. Device (1) according to Claim 1, **characterized in that** the flange (5) comprises, in one of its bodies (5b), a safety clip (9) for coupling with a complementary fitting produced on the other body (5a).

7. Device (1) according to Claim 1, **characterized in that** the two bodies of the flange (5) comprise a few internal fittings for coupling with the end-pieces (3) of the heat exchanger and a part of the ducts (2).

8. Device (1) according to Claim 1, **characterized in that** the two bodies of the flange (5) are joined by a thin film in the form of a hinge which can be broken to separate said bodies when the flange (5) has to be mounted.

9. Device (1) according to Claim 1, **characterized in that** the two bodies of the flange (5) are joined by a thin film in the form of a hinge designed to create a join between the two bodies of the flange (5).

10. Method for mounting a coupling device (1) between a heat exchanger comprising two end-pieces (3) arranged adjacently and fluid inlet and outlet ducts (2), in particular for motor vehicle heating/ventilation and/or air conditioning appliances, the coupling device (1) comprising:
- the end-pieces (3) of the heat exchanger and the fluid inlet and outlet ducts (2),
- sealing means (7) arranged between the end of each duct (2) and each end-piece (3), and
- a single flange (5) for simultaneously fastening the two ducts (2) to the two end-pieces (3), said single flange (5) being divided into two bodies, a top body (5a) and a bottom body (5b),
- two guiding rings (8), arranged respectively in contact with the collar (4) of the duct (2) and in a position adjacent to the 0-ring seal (7),
the method consisting in carrying out the following steps:
a) mounting the bottom body (5b) of the flange (5) on a support of the heating/ventilation and/or air conditioning appliance,
b) mounting the heat exchanger on an accommodation means of the heating/ventilation and/or air conditioning appliance, so that the end-pieces (3) of the heat exchanger are arranged on the internal fittings of said bottom body (5b) of the flange (5),
c) obtaining two ducts (2) provided with their corresponding guiding ring (8),
d) placing the sealing 0-ring seal (7) on the two ducts (2),
e) carrying out the coupling of the ends of the ducts (2) inside the corresponding end-pieces (3) of the heat exchanger, until the end of said end-pieces (3) comes into contact with the collar (4) of the ducts (2),
f) mounting the top body (5a) of the flange (5),
g) placing an adjusting screw (6) and screwing the two bodies of the flange (5), so that, during the screwing, the bottom body (5b) rises until it is fitted in the top body (5a), it being coupled in its turn with a safety clip (9).
